# EUROPÄISCHE PATENTANMELDUNG

(11) **EP 2 206 653 A1**
(43) Veröffentlichungstag der Anmeldung: **14.07.2010**
(21) Anmeldenummer: 08021389.5
(22) Anmeldetag: 09.12.2008
(51) Int. Cl.: B65B 57/10, F21K 99/00

(54) **Vorrichtung zum Überprüfen der Befüllung von Näpfen einer Verpackungseinheit**

(71) Anmelder: Uhlmann Pac-Systeme GmbH & Co. KG, 88471 Laupheim (DE)
(72) Erfinder: Gertitschke, Detlev, 88471 Laupheim (DE)
(74) Vertreter: Wächter, Jochen

(57) **Zusammenfassung**

Die Vorrichtung zum Überprüfen der Befüllung von Näpfen (4) einer Verpackungseinheit (2) weist eine Beleuchtungseinheit und eine Bildaufnahmeeinheit (12) auf, deren Aufnahmen zur Erkennung der Befüllung der Näpfe (4) auswertbar sind. Dabei weist die Beleuchtungseinheit mindestens ein OLED-Leuchtelement (16a, 16b) auf.

## Beschreibung

Die vorliegende Erfindung betrifft eine Vorrichtung zum Überprüfen der Befüllung von Näpfen einer Verpackungseinheit.

Eine derartige Vorrichtung ist aus DE 42 43 206 A1 bekannt. Hier ist zwischen der Füllstation und der Siegelstation eine optische Überwachungseinrichtung angeordnet, welche die Blisternäpfe auf korrekte Befüllung mit Tabletten überprüft. Die optische Überwachungseinrichtung enthält eine hoch auflösende Farbvideokamera, deren Bild von einem Rechner verarbeitet wird. Abhängig von dem vom Rechner gelieferten Signal kann eine Korrektur bei der Abfüllung an der Füllstation vorgenommen werden und die fehlerhaft befüllten Blister können aussortiert werden. Der Farbvideokamera ist eine Beleuchtungseinrichtung zugeordnet, welche die Höfe der Blisterfolie mit einem möglichst diffusen Licht ausleuchtet, um eine gleichmäßige Lichtverteilung und Beleuchtungsdichte zu erhalten und um Reflektionen zu vermindern. Als Beleuchtungseinrichtung wurden bislang Leuchtstoffröhren, Halogenlampen oder LEDs eingesetzt.

Ähnliche Vorrichtungen zum Überprüfen der Befüllung von Näpfen einer Verpackungseinheit sind aus DE 43 31 772 A1, EP 08 03 440 B1 und DE 26 38 138 A1 bekannt.

Allen diesen Vorrichtungen ist gemeinsam, dass der Kontrast zwischen Tabletten und Blisterfolien bei bestimmten Farbkombinationen zu gering ist, als dass die Auflösung der Kamera für eine sichere Unterscheidung ausreicht. Ähnliches trifft auf stark reflektierende Blisterfolien zu. Diese mangelnde Unterscheidungsfähigkeit geht zu Lasten der Genauigkeit bzw. erhöht die Ausschussquote für an sich gute Verpackungseinheiten. Bislang wurde mit einer Variation der Beleuchtung versucht, die Kontraste so zu verbessern, dass eine wirtschaftlich vertretbare Ausschussquote erzielt wird. Allerdings waren die bisherigen Systeme in ihrer Variabilität begrenzt und auch hinsichtlich der Lichtverteilung nicht optimal.

Der vorliegenden Erfindung liegt die Aufgabe zugrunde, eine Vorrichtung zum Überprüfen der Befüllung von Näpfen einer Verpackungseinheit zu schaffen, die unabhängig von dem Material und der Farbe der Verpackungseinheit sowie Form und Farbe der in den Näpfen angeordneten Produkte eine verbesserte Unterscheidung zwischen korrekt und nicht korrekt befüllten Näpfen ermöglicht.

Erfindungsgemäß weist die Vorrichtung zum Überprüfen der Befüllung von Näpfen einer Verpackungseinheit eine Beleuchtungseinheit und eine Bildaufnahmeeinheit auf, deren Aufnahmen zur Erkennung der Befüllung der Näpfe auswertbar sind. Dabei weist die Beleuchtungseinheit mindestens ein OLED-Leuchtelement auf.

Damit wird eine hervorragende Ausleuchtung mit variablen Einstellungen möglich, welche den Kontrast des von der Kamera aufgenommenen Bilds deutlich erhöht und somit die Qualität der Überprüfung steigert.

Vorzugsweise weist die Vorrichtung ein Gehäuse auf, in dessen Innenraum zumindest Teile der Bildaufnahmeeinheit und mindestens ein OLED-Leuchtelement angeordnet sind. Damit werden Störeinflüsse von außen ausgeschlossen und die Bildqualität erhöht.

Zur großflächigen Beleuchtung ist das OLED-Leuchtelement vorzugsweise als OLED-Leuchtfläche ausgebildet. Einen besonders fein gegliederten Aufbau zeigt das OLED-Leuchtelement aufgrund der in Matrixform angeordneten OLED-Pixel.

Diese OLED-Pixel sind vorzugsweise auf eine Grundplatte aufgedruckt. Hierfür kommen alle möglichen Materialien in Frage, beispielsweise biegsame Folien oder Glas.

Auch wenn einfarbige OLED-Leuchtelemente verwendet werden können, ist vorzugsweise jedes OLED-Pixel eines OLED-Leuchtelements zur Abgabe von Licht verschiedener Farben geeignet. Dadurch kann das OLED-Leuchtelement Licht verschiedener Farben auf gesteuerte Weise abgeben, wobei jedes OLED-Pixel hinsichtlich seiner Farbe individuell ansteuerbar ist.

Außerdem ist es von besonderem Vorteil, dass die Helligkeit des OLED-Leuchtelements zonenweise regelbar ist. Hierzu sollten die einzelnen OLED-Pixel individuell hinsichtlich ihrer Helligkeit ansteuerbar sein.

In einer bevorzugten Ausführungsform weist die Beleuchtungseinheit mehrere OLED-Leuchtelemente auf, die versetzt zueinander und unter einem unterschiedlichen Winkel zur Verpackungseinheit angeordnet sind. Damit wird eine noch individuellere Ausleuchtung unter Berücksichtigung der jeweiligen Rahmenbedingungen möglich.

Von besonderem Vorteil ist es, wenn die verschiedenen OLED-Leuchtelemente und deren Funktionen über eine gemeinsame Steuerung ansteuerbar sind. Damit kann eine für jeden Spezialfall genau abgestimmte Beleuchtungscharakteristik des Gesamtsystems eingestellt werden.

Bei durchsichtigen Verpackungseinheiten wird der Kontrast deutlich erhöht, wenn ein OLED-Leuchtelement unterhalb der Verpackungseinheit angeordnet ist und Auflicht erzeugt.

Von Vorteil ist es außerdem, wenn mindestens eines der OLED-Leuchtelemente derart schräg angeordnet ist, dass der Einfallswinkel des Lichts auf die Verpackungseinheit ein spitzer Winkel ist. Dadurch wird eine vorteilhafte Schattenbildung der Produkte in den Näpfen der Verpackungseinheit gewährleistet, welche die Bildauswertung deutlich verbessert.

Besonders vorteilhaft hinsichtlich der variablen Einstellung der Beleuchtung ist außerdem, wenn mindestens eines der OLED-Leuchtelemente zur Einstellung des Einfallswinkels drehbar ist.

Zur Vergrößerung der möglichen Leuchtflächen sind die OLED-Pixel vorzugsweise als aktive Elemente ausgebildet.

Weitere Einzelheiten, Merkmale und Vorteile der vorliegenden Erfindung ergeben sich aus der nachfolgenden Beschreibung unter Bezugnahme auf die Zeichnungen.
- Fig. 1: ist eine schematische Querschnittsansicht einer Ausführungsform der erfindungsgemäßen Vorrichtung zum Überprüfen der Befüllung von Näpfen einer Verpackungseinheit;
- Fig. 2: ist eine schematische Querschnittsansicht einer zweiten Ausführungsform der erfindungsgemäßen Vorrichtung zum Überprüfen der Befüllung von Näpfen einer Verpackungseinheit;
- Fig. 3: ist eine Draufsicht auf ein Beispiel eines OLED-Leuchtelements, das einfarbiges Licht abstrahlt;
- Fig. 4: ist eine Darstellung des OLED-Leuchtelements aus Fig. 2, das farbiges Licht abstrahlt;
- Fig. 5: ist eine Darstellung des OLED-Leuchtelements aus Fig. 2, bei welchem in verschiedenen Bereichen Licht unterschiedlicher Farbe abgestrahlt wird; und
- Fig. 6: ist eine Explosionsansicht des prinzipiellen Aufbaus eines mehrfarbigen OLED-Pixels.

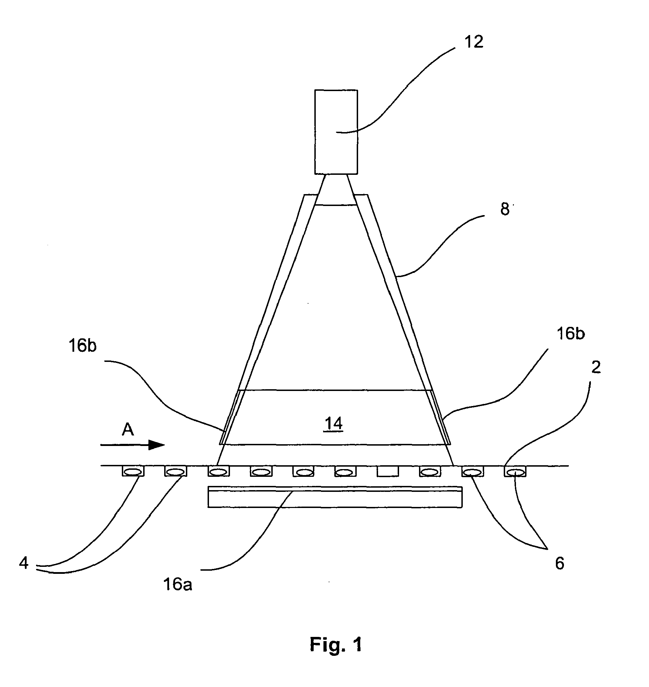

In Fig. 1 ist ein erstes Ausführungsbeispiel der erfindungsgemäßen Vorrichtung zum Überprüfen der Befüllung von Näpfen 4 einer Verpackungseinheit 2 dargestellt. Die Vorrichtung ist üblicherweise zwischen einer Füllstation und einer Siegelstation (beide nicht dargestellt) für die Verpackungseinheit 2 angeordnet. Die Verpackungseinheit 2 weist dabei Näpfe 4 auf, die vorzugsweise mit pharmazeutischen Produkten 6 wie Tabletten, Kapseln, Dragees und dergleichen in der Füllstation befüllt wurden. Auf dem Weg zur Siegelstation wird die Verpackungseinheit 2 in Richtung des Pfeils A weiter bewegt, wobei vor dem Aufbringen einer Deckfolie in der Siegelstation die korrekte Befüllung der Näpfe 4 der Verpackungseinheit 2 sichergestellt werden muss. Hierzu ist die in Fig. 1 dargestellte Vorrichtung zum Überprüfen der Befüllung der Näpfe 4 der Verpackungseinheit 2 vorgesehen. Die erfindungsgemäße Vorrichtung kann jedoch auch in anderen Produktbereichen Anwendung finden.

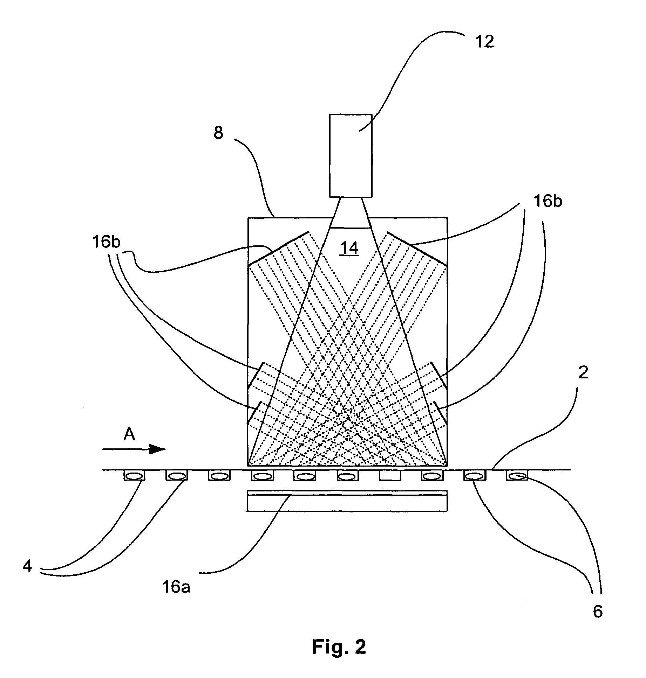

In der in Fig. 1 dargestellten Ausführungsform umfasst die Vorrichtung ein Gehäuse 8, eine Beleuchtungseinheit und eine Bildaufnahmeeinheit 12, vorzugsweise eine Farbkamera, die senkrecht von oben einen bestimmten Abschnitt der Verpackungseinheit 2 in ihrem Prüffeld 14 aufnehmen kann. Das Gehäuse 8 der Vorrichtung ist vorzugsweise lichtundurchlässig, so dass die im Inneren bestehenden Lichtverhältnisse optimal auf die jeweilige Anwendung ausgerichtet werden können. Die Bildaufnahmeeinheit 12 kann auch an einer anderen Position als der dargestellten angeordnet sein. Auch der Prüfbereich 14 kann variabel gestaltet werden und reicht von der gesamten Ausdehnung des Gehäuses 8 (wie in Fig. 1 und 2 dargestellt) bis zu einem kleinen Abschnitt. Die Auswertung des Prüfbereichs 14 erfordert Rechenzeit, die die Geschwindigkeit der Maschine beeinflusst. Üblicherweise kann mit der erfindungsgemäßen Vorrichtung daher ein Prüfbereich 14 von ca. 300 x 300 mm abgedeckt werden.

Im dargestellten Beispielsfall der Fig. 1 besteht die Beleuchtungseinheit aus zwei Bestandteilen, einem unterhalb der Verpackungseinheit 2 angeordneten OLED-Leuchtelement 16a und einem in das Gehäuse 8 der Vorrichtung integrierten OLED-Leuchtelement 16b, das in einem unteren Wandabschnitt des als nach unten offener Trichter ausgebildeten Gehäuses 8 an dessen Innenseite angebracht sind.

Die Bildaufnahmeeinheit 12 nimmt auf digitale Weise Bilder des Prüfbereichs 14 auf und leitet die Informationen an eine nicht dargestellte Auswerteeinheit weiter. Um auch bei stark reflektierenden Verpackungseinheiten 2 bzw. bei geringem Farbunterschied zwischen Verpackungseinheit 2 und pharmazeutischen Produkten 6 eine hohe Sicherheit bei der Überprüfung gewährleisten zu können, muss der Prüfbereich 14 nicht nur besonders hell, sondern teilweise variabel ausgeleuchtet werden.

Neben der in Fig. 1 dargestellten Ausführungsform gibt es hierzu eine nahezu unbegrenzte Anzahl von Möglichkeiten der Anordnung der einzelnen OLED-Leuchtelemente 16a, 16b der Beleuchtungseinheit. Allerdings kann das untere OLED-Leuchtelement 16a, welches das Auflicht generiert, unter Umständen auch weggelassen werden, insbesondere wenn nur lichtundurchlässige Verpackungseinheiten 2 untersucht werden.

In Fig. 2 ist eine weitere Ausführungsform der erfindungsgemäßen Vorrichtung zum Überprüfen der Befüllung von Näpfen 4 einer Verpackungseinheit 2 dargestellt. Diese unterscheidet sich von der Ausführungsform der Fig. 1 darin, dass eine Mehrzahl von oberen OLED-Leuchtelementen 16b im Innenraum des Gehäuses 8 angeordnet ist. Das Gehäuse 8 ist hier quaderförmig ausgebildet. Generell ist die Geometrie des Gehäuses 8 vorzugsweise an die Geometrie des Prüfbereichs 14 angepasst. Die einzelnen OLED-Leuchtelemente 16b sind hierbei vorzugsweise als OLED-Panels ausgebildet, welche schwenkbar gelagert sind, um beliebige Einstrahlwinkel des Lichts auf die Verpackungseinheit 2 einstellen zu können. Der Winkel der Einstrahlung von zumindest Teilen der OLED-Leuchtelemente 16b sollte in jeder Ausführungsform ein spitzer Winkel sein.

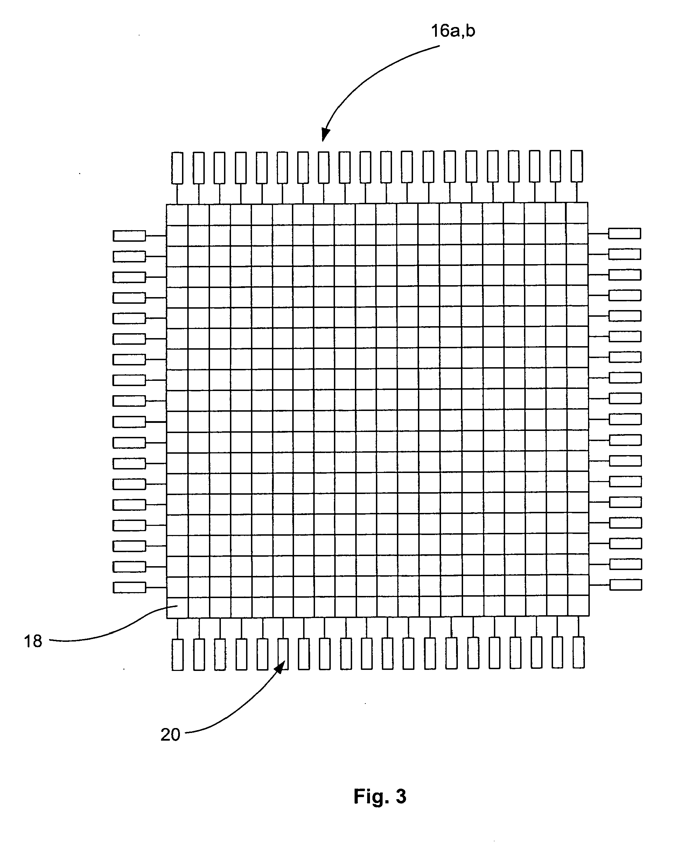

Ein Beispiel eines OLED-Leuchtelements 16a, 16b ist in Fig. 3 schematisch dargestellt. Das OLED-Leuchtelement 16a, 16b ist als OLED-Leuchtfläche ausgebildet, welche in Matrixform angeordnete OLED-Pixel 18 aufweist. Die OLED-Pixel 18 sind stromgetrieben, wobei die Spannung zur Zeilen- oder Spaltenansteuerung der OLED-Pixel 18 programmierbar ist. In Fig. 3 sind die Kontakte 20 zur Stromversorgung der jeweiligen Zeilen und Spalten der OLED-Matrix dargestellt.

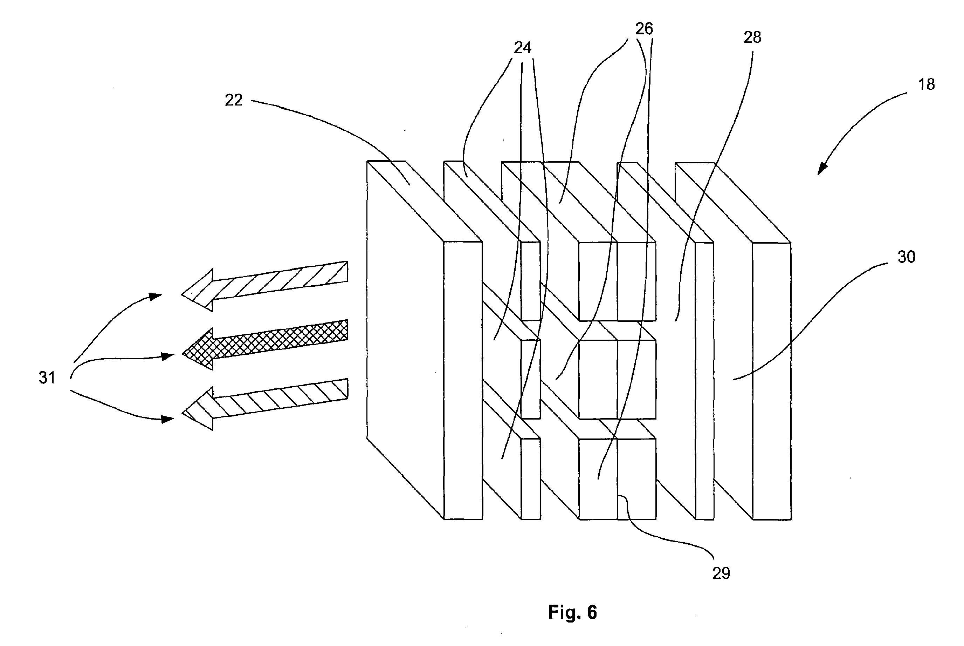

Der grundlegende Aufbau eines mehrfarbigen OLED-Pixels 18 ist aus Fig. 6 ersichtlich. Die OLED-Pixel 18 sind auf eine transparente Grundplatte 22, vorzugsweise aus Glas oder Folie, aufgebracht. Es sind aber eine Reihe anderer Materialien denkbar.

Oberhalb der Grundplatte 22 sind je Grundfarbe (rot, grün, blau) Anoden 24 aufgebracht, die üblicherweise aus einer amorphen, elektrisch leitenden Zusammensetzung eines Zinnoxids bestehen, beispielsweise aus Indium-Zinnoxid. Auf jeder Anode 24 ist ein OLED-Schichtstapel 26 angeordnet, bestehend aus einer Lochtransportschicht und einer Elektronentransportschicht mit einer dazwischen liegenden Lichtemissionsschicht. Den Abschluss des OLED-Schichtstapels 26 bildet die Kathode 28, ebenfalls vorzugsweise aus elektrisch leitendem Indium-Zinnoxid. Zum Schutz vor Feuchtigkeit und Sauerstoff werden die OLED-Pixel 18 mit einer Schutzschicht 30 versiegelt. Durch entsprechende Ansteuerung der Anoden 24 kann der Farbton 31 und dessen Helligkeit eingestellt werden.

Die OLED-Pixel 18 können aber natürlich in vereinfachten Ausführungsformen auch monochrom sein. Die OLED-Pixel 18 können als passive Elemente ausgebildet sein, was aber die Größe der Leuchtfläche einschränkt. Deshalb sind aktive OLED-Pixel 18 bevorzugt, bei denen jeder Anode 24 ein Transistor (nicht dargestellt) zugeordnet ist.

Einige Vorteile der OLED-Leuchtelemente 16a, 16b sind die große Helligkeit bei hohem Kontrast, eine schnelle Ansprechzeit, ein geringes Gewicht und eine niedrige Betriebsspannung. Ein OLED-Pixel 18 ist zudem besonders flach und dünn, denn der gesamte Schichtenaufbau kann weniger als 500 nm dick sein, so dass die Gesamtdicke des OLED-Leuchtelements 16a, 16b wesentlich durch die Grundplatte 22 bestimmt wird.

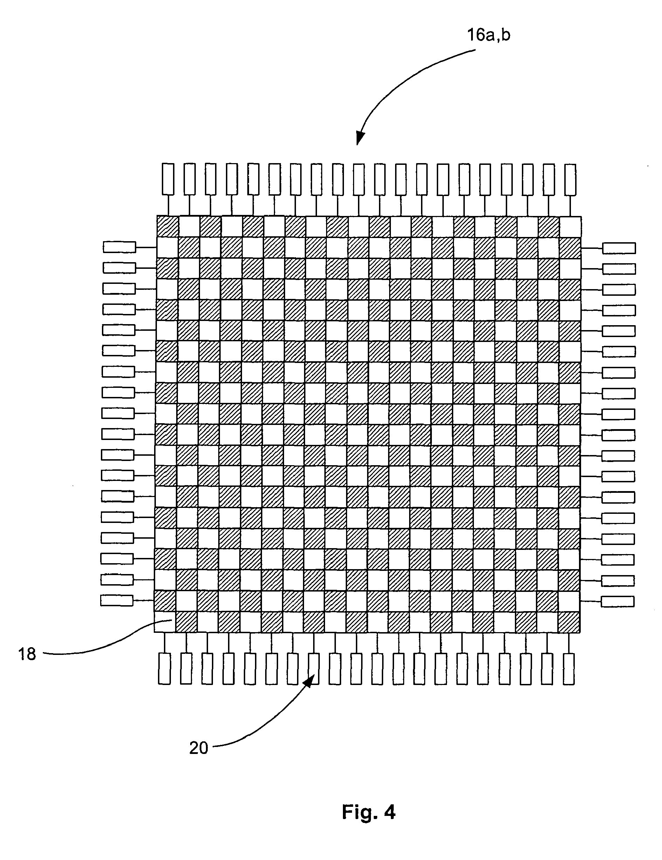

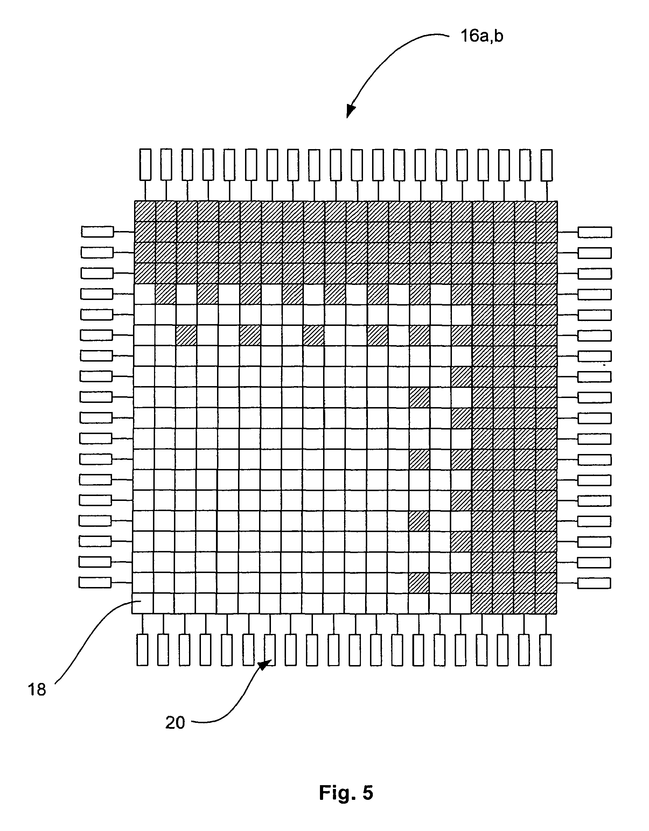

Mit den OLED-Leuchtelementen 16a, 16b ist es nicht nur möglich, Licht einer Farbe abzustrahlen (siehe Fig. 3), sondern es können beispielsweise auch zwei Farben gleichzeitig von verschiedenen OLED-Pixeln 18 abgestrahlt werden (siehe Fig. 4). Bei bestimmten Ausleuchtungsanforderungen kann es sinnvoll sein, nur einen bestimmten Bereich der Pixel eines OLED-Leuchtelements 16a, 16b farbig leuchten zu lassen oder in diesem Bereich die Intensität besonders hoch einzustellen, wie in Fig. 5 dargestellt ist.

Aufgrund der variablen Farbeinstellungen, der variablen Helligkeitseinstellungen und der möglichen Einstellung des Einstrahlwinkels des von den OLED-Leuchtelementen 16b ausgestrahlten Lichts auf die Verpackungseinheit 2 wird die Variabilität und Qualität der Beleuchtung deutlich verbessert und somit die Qualität der Überprüfung der Befüllung der Näpfe 4 der Verpackungseinheit 2 deutlich gesteigert.

## Patentansprüche

1. Vorrichtung zum Überprüfen der Befüllung von Näpfen (4) einer Verpackungseinheit (2), die eine Beleuchtungseinheit und eine Bildaufnahmeeinheit (12) aufweist, deren Aufnahmen zur Erkennung der Befüllung der Näpfe (4) auswertbar sind,
**dadurch gekennzeichnet, dass**
die Beleuchtungseinheit mindestens ein OLED-Leuchtelement (16a, 16b) aufweist.

2. Vorrichtung nach Anspruch 1, **dadurch gekennzeichnet, dass** sie ein Gehäuse (8) aufweist, in dessen Innenraum zumindest Teile der Bildaufnahmeeinheit (12) und mindestens ein OLED-Leuchtelement (16b) angeordnet sind.

3. Vorrichtung nach einem der vorangehenden Ansprüche, **dadurch gekennzeichnet, dass** das OLED-Leuchtelement (16a, 16b) in Matrixform angeordnete OLED-Pixel (18) aufweist.

4. Vorrichtung nach Anspruch 3, **dadurch gekennzeichnet, dass** die OLED-Pixel (18) auf eine Grundplatte (22) aufgebracht sind.

5. Vorrichtung nach Anspruch 4, **dadurch gekennzeichnet, dass** die OLED-Pixel (18) auf die Grundplatte (22) aufgedruckt sind.

6. Vorrichtung nach einem der Ansprüche 3 bis 5, **dadurch gekennzeichnet, dass** jedes OLED-Pixel (18) eines OLED-Leuchtelements (16a, 16b) zur Abgabe von Licht verschiedener Farben geeignet ist.

7. Vorrichtung nach einem der vorangehenden Ansprüche, **dadurch gekennzeichnet, dass** das OLED-Leuchtelement (16a, 16b) geeignet ist, Licht verschiedener Farben auf gesteuerte Weise abzugeben.

8. Vorrichtung nach Anspruch 6, **dadurch gekennzeichnet, dass** jedes OLED-Pixel (18) individuell hinsichtlich seiner Farbe ansteuerbar ist.

9. Vorrichtung nach einem der Ansprüche 3 bis 8, **dadurch gekennzeichnet, dass** jedes OLED-Pixel (18) individuell hinsichtlich seiner Helligkeit ansteuerbar ist.

10. Vorrichtung nach einem der vorangehenden Ansprüche, **dadurch gekennzeichnet, dass** die Beleuchtungseinheit mehrere OLED-Leuchtelemente (16a, 16b) aufweist, die versetzt zueinander und unter einem unterschiedlichen Winkel zur Verpackungseinheit (2) angeordnet sind.

11. Vorrichtung nach Anspruch 10, **dadurch gekennzeichnet, dass** die verschiedenen OLED-Leuchtelemente (16a, 16b) und deren Funktionen über eine gemeinsame Steuerung ansteuerbar sind.

12. Vorrichtung nach Anspruch 10 oder 11, **dadurch gekennzeichnet, dass** ein OLED-Leuchtelement (16a) unterhalb der Verpackungseinheit (2) angeordnet ist und Auflicht erzeugt.

13. Vorrichtung nach einem der vorangehenden Ansprüche, **dadurch gekennzeichnet, dass** mindestens eines der OLED-Leuchtelemente (16b) derart schräg angeordnet ist, dass der Einfallswinkel des Lichts auf die Verpackungseinheit (2) ein spitzer Winkel ist.

14. Vorrichtung nach Anspruch 13, **dadurch gekennzeichnet, dass** mindestens eines der OLED-Leuchtelemente (16b) zur Einstellung des Einfallswinkels drehbar ist.

15. Vorrichtung nach einem der vorangehenden Ansprüche, **dadurch gekennzeichnet, dass** die OLED-Pixel (18) als aktive Elemente ausgebildet sind.
